# DEMANDE DE BREVET EUROPEEN

(11) **EP 0 921 628 A1**
(43) Date de publication de la demande: **09.06.1999**
(21) Numéro de dépôt: 98121600.5
(22) Date de dépôt: 20.11.1998
(51) Int. Cl.: H02M 7/217, H02M 3/156

(54) **Dispositif de conversion d' une tension alternative en une tension continue**

(30) Priorité: 02.12.1997 FR 9715153
(71) Demandeur: SOMFY, F-74300 Cluses (FR)
(72) Inventeur: Bruno, Serge, 74460 Marnaz (FR)
(74) Mandataire: Meylan, Robert Maurice

(57) **Abrégé**

Le dispositif de conversion des alternances positives comprend une résistance (R1) de limitation du courant, un transistor (T1) de découpage du courant branché en série avec la résistance R1), un condensateur de stockage du courant (C1) en série avec le transistor et aux bornes duquel la tension continue homopolaire est prise, un diviseur de tension (R2,R3) en parallèle à la résistance au transistor et au condensateur, fournissant une tension de référence (VRefM) proportionnelle aux alternances positives de la tension d'alimentation et, un moyen de comparaison fermant le transistor de manière à charger le condensateur et ouvrant le transistor de manière à permettre la décharge du condensateur pour assurer la continuité de la tension homopolaire. La fonction de comparaison est également remplie par le transistor (T1), ce qui permet de simplifier le circuit.

## Description

La présente invention concerne un dispositif de conversion des alternances positives d'une tension alternative en une tension continue homopolaire selon le préambule de la revendication 1.

Un tel dispositif est connu du document FR-A-2 672 448. Dans ce dispositif le moyen de découpage est assuré par un ensemble constitué d'un transistor à effet de champ, d'une résistance, d'une première diode de Zener et d'un second transistor, tandis que le moyen de comparaison est constitué d'un troisième transistor, de trois résistances et d'une seconde diode de Zener. Un tel dispositif comprend un nombre relativement élevé de composants et il est par conséquent d'un coût élevé.

L'invention a pour but de réaliser un dispositif plus simple.

Le dispositif selon l'invention est défini par la partie caractérisante de la revendication 1.

La fonction découpage du courant et la fonction comparaison des tensions sont donc remplies par un seul et même transistor.

Dans son mode d'exécution le plus simple le dispositif selon l'invention comprend un transistor, trois résistances et un condensateur.

Selon un deuxième mode d'exécution, le dispositif comprend en outre une diode branchée entre les résistances du pont diviseur, une résistance branchée en parallèle à la diode et à la deuxième résistance du pont diviseur et un deuxième condensateur branché en parallèle à la deuxième résistance du pont diviseur, ledit deuxième condensateur maintenant le transistor polarisé, de sorte que la conduction du transistor se produit au début de l'alternance positive VPM de la tension.

Selon un troisième mode d'exécution, le dispositif comprend en outre, entre les résistances du pont diviseur, un circuit additionnel comportant deux résistances, une diode, une capacité et un transistor. La première résistance dudit circuit additionnel est branchée entre la première résistance du pont diviseur et la base du transistor, la diode du circuit additionnel est branchée entre ladite première résistance du pont diviseur et l'émetteur du transistor, la deuxième résistance dudit circuit additionnel est branchée par l'intermédiaire d'un troisième condensateur à l'émetteur dudit transistor, la ligne reliant ladite deuxième résistance et la capacité sont en outre reliées au point M du circuit et le collecteur du transistor est relié à la deuxième résistance du pont diviseur. La tension de référence est prise sur le collecteur dudit transistor. Le circuit du dispositif crée une seconde plage de conduction pendant l'alternance positive de la tension.

Selon une première variante du troisième mode d'exécution, le dispositif comporte en outre un microcontrolleur et, entre les résistances du pont diviseur, un circuit additionnel comprenant une résistance, deux diodes, une capacité et un transistor. La première diode est branchée entre la première résistance du pont diviseur et la base du transistor, la résistance est branchée entre la première résistance du pont diviseur et l'émetteur du transistor par l'intermédiaire de la capacité et de la seconde diode, l'émetteur du transistor est également relié à la première résistance du pont diviseur et le collecteur du transistor est relié à la deuxième résistance du pont diviseur. La tension de référence est prise sur le collecteur dudit transistor. L'entrée du microcontrolleur reçoit au travers d'un second pont diviseur à résistances une tension image de la tension continue homopolaire et la sortie du microcontrolleur est reliée à la base dudit transistor, ladite sortie du microcontrolleur permettant de bloquer la conduction du transistor.

Selon une autre variante du troisième mode d'exécution, la sortie S du microcontrolleur est reliée au circuit du troisième mode d'exécution par l'intermédiaire d'un transistor et d'une résistance.

L'invention sera mieux comprise à l'aide de la description de modes d'exécution de celle-ci et des figures qui s'y rapportent.
La figure 1 représente le circuit du dispositif selon un premier mode d'exécution.
La figure 2a représente la tension alternative de la source.
La figure 2b représente les alternances positives à convertir de la tension de la source.
La figure 3 représente la tension de référence VRefM et la tension VUM aux bornes de la charge dans ce premier mode d'exécution.
La figure 4 représente le circuit du dispositif selon un deuxième mode d'exécution.
La figure 5 représente la tension VUM aux bornes de la charge dans le deuxième mode d'exécution.
La figure 6 représente le circuit du dispositif selon un troisième mode d'exécution.
La figure 7 représente la tension VUM aux bornes de la charge dans le troisième mode d'exécution.
La figure 8 représente le circuit du dispositif selon une première variante du troisième mode d'exécution.
La figure 9 représente le circuit du dispositif selon une deuxième variante du troisième mode d'exécution.
La figure 10 représente le circuit du dispositif selon une troisième variante du troisième mode d'exécution.
La figure 11 représente le circuit du dispositif selon une quatrième variante du troisième mode d'exécution.

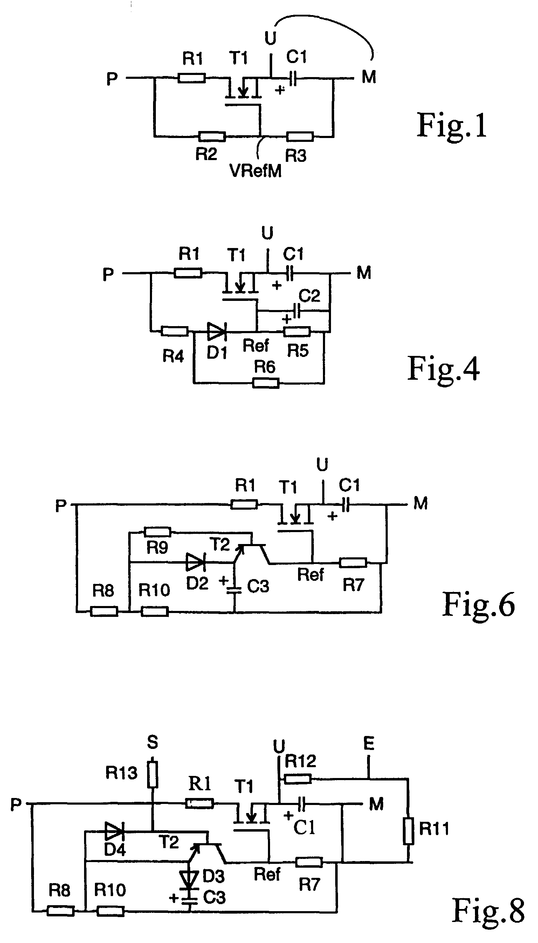

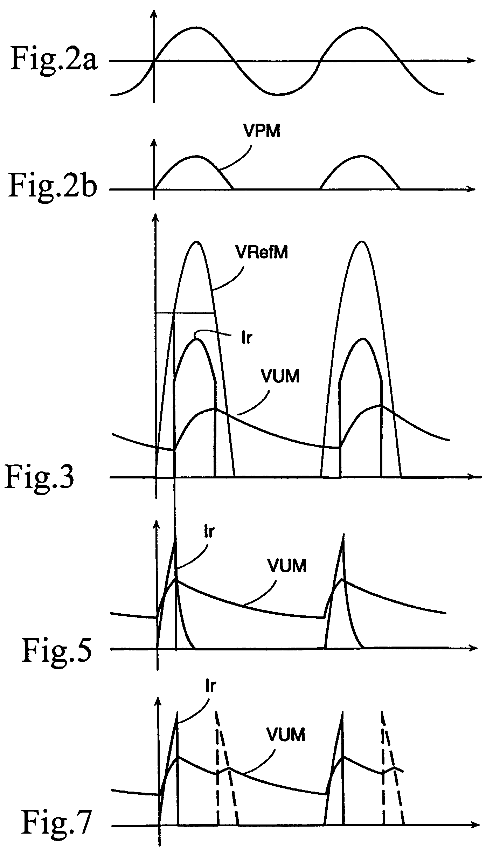

La figure 1 représente le dispositif sous sa forme la plus simple. Il comprend un transistor à effet de champ T1 dont le drain est relié à la phase P de la source à travers une résistance R1 limitant le courant, la base et la source sont reliées à une des bornes du condensateur C1 et dont la grille est reliée au point milieu d'un diviseur de tension constitué des résistances R2 et R3, ce diviseur de tension étant branché en parallèle à la résistance R1, au transistor T1 et au condensateur C1. Sur ce diviseur de tension sont appliquées les alternances positives VPM (figure 2b) d'une tension alternative (figure 2a) redressée par une diode ou un pont de Graetz non représentés. Le diviseur de tension fournit une tension VRefM qui est une image de la tension VPM et qui est utilisée comme tension de référence. La tension continue homopolaire VUM est obtenue aux bornes du condensateur C1 entre les points U et M.

Le transistor T1 assure simultanément les fonctions de découpage du courant et de comparaison des tensions VRefM et VUM. Le fonctionnement de ce mode d'exécution sera décrit plus particulièrement en référence à la figure 3: lorsque la tension VRefM mesurée par le diviseur de tension est supérieure à la tension continue homopolaire VUM, le transistor T1 conduit et la capacité C1 se charge au travers de la résistance R1 par le courant Ir. Dès que la tension de référence VRefM est inférieure à la tension VUM, le transistor T1 se bloque, le courant Ir est interrompu et la capacité C1 se décharge assurant ainsi la continuité de la tension VUM.

En considérant un courant de 30 mA fourni à la charge, des valeurs, données à titre d'exemple, pour les composants de ces deux premiers modes d'exécution sont les suivantes: R1=1kΩ; R2=47kΩ; R3=4,7kΩ; C1=47µF.

Dans le mode d'exécution représenté à la figure 1, l'inconvénient est que la conduction du transistor T1 a lieu lorsque la différence de potentiel aux bornes du transistor T1 se situe dans la plage des valeurs les plus fortes, c'est-à-dire proche de la crête de l'alternance positive (voir la figure 3), ce qui provoque une dissipation importante par le transistor T1.

Le deuxième mode d'exécution représenté à la figure 4 permet d'améliorer les performances du circuit représenté à la figure 3.

Le circuit du deuxième mode d'exécution est basé sur le circuit du premier mode d'exécution, dans lequel la résistance R4 correspond à la résistance R2 et la résistance R5 correspond à la résistance R3. Une diode D1, une résistance R6 et une capacité C2 ont été ajoutées au circuit de la figure 1. La diode D1 est branchée entre la résistance R4 et le point sur lequel la tension de référence VRefM est prise. La résistance R6 est branchée entre la ligne reliant la résistance R4 à la diode D1 et la ligne issue de la résistance R5 du pont diviseur. La capacité C2 est finalement branchée en parallèle à la résistance R5.

Le fonctionnement de ce mode d'exécution sera décrit en référence à la figure 5. La durée de conduction du transistor T1 est réduite à une portion de la demialternance de la tension VRefM (voir la figure 3) de sorte que la différence de potentiel aux bornes du transistor T1 est dans la plage des valeurs les plus faibles. Le courant traversant la résistance R1 est représenté par la courbe Ir. La puissance dissipée par le transistor T1 est alors réduite. En particulier, la présence de la capacité C2 permet de maintenir le transistor T1 polarisé de manière qu'il conduise dès l'apparition de l'alternance positive et qu'il cesse de conduire dès que la tension VUM est supérieure à VRefM.

En considérant un courant de 30 mA fourni à la charge, des valeurs, données à titre d'exemple, pour les composants de ce deuxième mode d'exécution sont les suivantes:
R1=1kΩ; R4=47kΩ; R5=470kΩ; R6=4,7kΩ; C1=47µF; C2=1µF.

Dans ce mode d'exécution, un courant indésirable subsiste toutefois lorsque le transistor T1 est en train de se bloquer provoquant ainsi une dissipation inutile.

Le troisième mode d'exécution permet de pallier l'inconvénient mentionné ci-dessus. Ce mode est décrit plus particulièrement en référence aux figures 6 et 7.

Ce troisième mode d'exécution est basé sur le premier mode d'exécution représenté à la figure 1 et il comprend en outre un circuit comportant deux résistances R9 et R10, une diode D2, une capacité C3 et un transistor T2. Les résistances R8 et R7 du circuit correspondent aux résistances R2 et R3 respectivement du pont diviseur de la figure 1. La résistance R9 est branchée entre la ligne issue de la résistance R8 et la base du transistor T2. La diode D2 est branchée entre la ligne issue de la résistance R8 et l'émetteur du transistor T2. La résistance R10 est en série avec la capacité C3, les deux étant en parallèle à la diode D2 et reliées également à l'émetteur du transistor T2. Le collecteur du transistor T2 est relié à la résistance R7 et la tension de référence VRefM appliquée à la grille du transistor T2 est prise sur la ligne reliant le collecteur du transistor T2 à la résistance R7. La ligne reliant la résistance R10 et la capacité C3 est également reliée au point M du circuit.

Le fonctionnement de ce troisième mode d'exécution est décrit en référence à la figure 7. Grâce aux composants ajoutés, le courant résiduel est supprimé et, de plus, une seconde plage de conduction du transistor T1 apparaît pendant l'alternance positive, juste avant la plage de tension nulle. Cette deuxième plage de conduction est en outre avantageuse en ce qu'elle permet la recharge de la capacité C1 en deux temps. Le courant traversant la résistance R1 durant cette deuxième plage de conduction est représenté en traits tiretés dans la figure 7.

En considérant un courant de 30 mA fourni à la charge, des valeurs, données à titre d'exemple, pour les composants du troisième mode d'exécution sont les suivantes:
R1=1kΩ; R8=47kΩ; R7=470kΩ; R10=4,7kΩ; C1=47µF; C3=1µF.

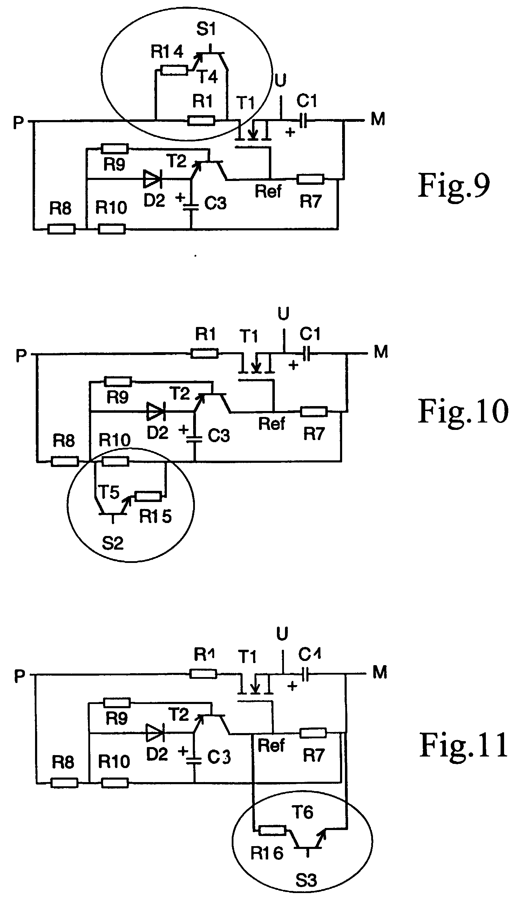

Une première variante de ce troisième mode d'exécution est décrite en référence à la figure 8.

Dans cette variante, un microcontrolleur (non représenté) a été ajouté. Ce microcontrolleur reçoit sur l'une de ses entrées E un signal VEM qui est une image de la tension VUM aux bornes de la capacité C1 et fournit sur l'une de ses sorties S une tension permettant de bloquer le transistor T1 pendant la période durant laquelle la conduction n'est pas souhaitée. Le circuit de cette variante est basé sur le circuit du troisième mode d'exécution (figure 6) dans lequel la résistance R9 est remplacée par une diode D4, la diode D2 est supprimées et une diode D3 est ajoutée entre la capacité C3 et l'émetteur du transistor T2. La tension sur l'entrée E du microcontrolleur est obtenue par un pont diviseur constitué par des résistances R11 et R12 branchées entre les points U et M du circuit, c'est-à-dire aux bornes de la capacité C1, et la sortie S du microcontrolleur est branchée au travers d'une résistance R13 à la base du transistor T2.

L'intérêt de cette première variante est de permettre l'interruption de la conduction du transistor T1 à volonté, par exemple lors d'une très faible consommation de puissance par la charge. La sortie S du microcontrolleur permet en effet de bloquer la conduction du transistor T2 et par conséquent celle du transistor T1.

Selon une deuxième variante du troisième mode d'exécution, basée sur le circuit de la figure 6 et représentée à la figure 9, la sortie S1 d'un microcontrolleur (non représenté) est branchée sur la base d'un transistor T4, dont l'émetteur est relié au point P du circuit par l'intermédiaire d'une résistance R14 et dont le collecteur est relié au drain du transistor T1.

Selon une troisième variante du troisième mode d'exécution représentée à la figure 10, la sortie S2 du microcontrolleur (non représenté) est branchée sur la base d'un transistor T5. Le collecteur du transistor T5 est relié au point commun entre les résistances R8 et R10 et l'émetteur est relié, au travers d'une résistance R15, à la ligne issue de la résistance R10.

Selon une quatrième variante du troisième mode d'exécution représentée à la figure 11, la sortie S3 du microcontrolleur (non représenté) est branchée sur la base d'un transistor T6, dont le collecteur est relié au collecteur du transistor T2 par l'intermédiaire d'une résistance R16 et dont l'émetteur est relié au point M du circuit.

L'intérêt de ces trois dernières variantes du troisième mode d'exécution est qu'elles permettent de commander la puissance à fournir par l'alimentation. La présence d'un signal sur la sortie S du microcontrolleur permet à l'alimentation de fournir une puissance plus importante pour la charge.

Les modes d'exécution décrits le sont à titre d'exemple et des variations dans le cadre de la protection revendiquée sont bien entendu possibles.

## Revendications

1. Dispositif de conversion des alternances positives (VPM) d'une tension alternative alimentant le dispositif entre un point P et un point M en une tension continue homopolaire (VUM), comprenant, un moyen de limitation du courant constitué d'une résistance (R1) traversée par les alternances positives (VPM), un moyen de découpage du courant (T1) branché en série avec ladite résistance (R1), un moyen de stockage du courant constitué d'un condensateur (C1) branché en série avec le transistor de découpage du courant (T1) et aux bornes duquel la tension continue homopolaire (VUM) est prise, des moyens de mesure des alternances positives (VPM) constitués d'un pont diviseur de tension (R2,R3;R4,R5;R7,R8) branché en parallèle à la résistance de limitation du courant, au moyen de découpage du courant et audit condensateur, fournissant une tension de référence (VRefM) proportionnelle aux alternances positives (VPM), et un moyen de comparaison (T1) fermant le moyen de découpage (T1) du courant de manière à charger ledit condensateur (C1) et ouvrant le moyen de découpage du courant (T1) de manière à permettre la décharge dudit condensateur (C1) pour assurer la continuité de la tension homopolaire (VUM), caractérisé en ce que le moyen de découpage du courant et le moyen de comparaison sont constitués par un transistor (T1), dont le drain est relié au moyen de limitation du courant (R1), la grille reçoit la tension de référence (VRefM) et la base et la source sont reliées au condensateur (C1), de telle sorte que le transistor est conducteur lorsque la tension de référence (VRefM) est supérieure à la tension continue homopolaire (VUM) et que le transistor (T1) est non conducteur lorsque la tension continue homopolaire (VUM) est supérieure à la tension de référence (VRefM).

2. Dispositif selon la revendication 1, caractérisé en ce qu'il comprend en outre une diode (D1) branchée entre les résistances (R4,R5) du pont diviseur, une résistance (R6) branchée en parallèle à la diode (D1) et à la deuxième résistance (R5) du pont diviseur et un deuxième condensateur (C2) branché en parallèle à la deuxième résistance (R5) du pont diviseur, ledit deuxième condensateur (C2) maintenant le transistor (T1) polarisé, de sorte que la conduction du transistor se produit au début de l'alternance positive (VPM) de la tension.

3. Dispositif selon la revendication 1, caractérisé en ce qu'il comprend en outre, entre les résistances (R7,R8) du pont diviseur, un circuit additionnel comportant deux résistances (R9,R10), une diode (D2), une capacité (C3) et un transistor (T2), la première résistance (R9) dudit circuit additionnel étant branchée entre la première résistance (R8) du pont diviseur et la base du transistor (T2), la diode (D2) du circuit additionnel étant branchée entre ladite première résistance (R8) du pont diviseur et l'émetteur du transistor (T2), la deuxième résistance (R10) dudit circuit additionnel étant branchée par l'intermédiaire d'un troisième condensateur (C3) à l'émetteur dudit transistor (T2), la ligne reliant ladite deuxième résistance (R10) et la capacité (C3) étant en outre reliée au point M du dispositif et le collecteur du transistor (T2) étant relié à la deuxième résistance (R7) du pont diviseur, et en ce que la tension de référence (VRefM) est prise sur le collecteur dudit transistor (T2) de sorte que le circuit crée une seconde plage de conduction du transistor (T1) pendant l'alternance positive (VPM) de la tension.

4. Dispositif selon la revendication 1, caractérisé en ce qu'il comprend en outre, entre les résistances (R7,R8) du pont diviseur, un circuit additionnel comprenant une résistance (R10), deux diodes (D3,D4), une capacité (C3) et un transistor (T2), la première diode (D4) étant branchée entre la première résistance (R8) du pont diviseur et la base du transistor (T2), la résistance (R10) étant branchée entre la première résistance (R8) du pont diviseur et l'émetteur du transistor (T2) par l'intermédiaire de la capacité (C3) et de la seconde diode (D3), l'émetteur du transistor (T2) étant également relié à la première résistance (R8) du pont diviseur et le collecteur du transistor (T2) étant relié à la deuxième résistance (R7) du pont diviseur, en ce que la tension de référence (VRefM) est prise sur le collecteur dudit transistor (T2), et en ce que la sortie (S) d'un microcontrolleur est reliée à la base dudit transistor (T2), l'entrée (E) du microcontrolleur recevant au travers d'un second pont diviseur à résistances (R11,R12), une tension (VEM) image de la tension continue homopolaire (VUM), ladite sortie (S) du microcontrolleur permettant de bloquer la conduction du transistor (T1).

5. Dispositif selon la revendication 1, caractérisé en ce qu'il comprend en outre un microcontrolleur dont la sortie (S1,S2,S3) est branchée sur l'alimentation de manière à commander la puissance fournie par l'alimentation.

6. Dispositif selon la revendication 5, caractérisé en ce que la sortie (S1) du microcontrolleur est reliée à la base d'un transistor (T4), dont l'émetteur est relié au point P du dispositif par l'intermédiaire d'une résistance (R14) et dont le collecteur est relié au drain du transistor (T1) de l'alimentation.
